Europäisches Patentamt

European Patent Office

Office européen des brevets

(11) Publication number: **0 433 998 A1**

## EUROPEAN PATENT APPLICATION

(21) Application number: 90124619.9

(51) Int. Cl.⁵: **H01M 10/48**

(22) Date of filing: **18.12.90**

(30) Priority: **19.12.89 IT 1261389**

(43) Date of publication of application:
**26.06.91 Bulletin 91/26**

(84) Designated Contracting States:
**AT BE CH DE DK ES FR GB GR LI LU NL SE**

(71) Applicant: **BAILEY ESACONTROL S.p.A.**
**Via Hermada 6**
**I-16154 Genoa(IT)**

(72) Inventor: **Cavaliere, Armando**
**Via Ausonia, 10D/7**
**I-16136 Genova(IT)**

(74) Representative: **Prato, Roberto et al**
**STUDIO TORTA Società Semplice Via Viotti 9**
**I-10121 Torino(IT)**

(54) Solid state sensors for measuring the charge of lead acid batteries.

(57) The present invention relates to a solid state sensor for measuring the charge of lead acid batteries.
According to the invention, the sensor features a pair of auxiliary electrodes immersed in the electrolyte of
the battery and connected electrically, at the other end, to the terminals of a voltage sensor.

EP 0 433 998 A1

## SOLID STATE SENSORS FOR MEASURING THE CHARGE OF LEAD ACID BATTERIES

The present invention relates to solid state sensors for measuring the charge of lead acid batteries.

According to the current state of the art, known battery charge measuring devices operate on the basis of electrolyte density.

Exceptions to this are devices implementing chemical-optical processes, which, however, can only be employed in laboratories.

As they are discharged, batteries are known to undergo a chemical reaction which, in the presence of the lead of one of the electrodes, is converted into lead sulphate and water according to the following equation:

$$PbO2 + Pb + 2H2SO4 -----> 2PbSO4 + 2H2O \quad (1)$$

As the reaction proceeds rightwards, the amount of sulphuric acid in the solution is reduced, thus reducing the density of the solution.

This is therefore used as a basis for measuring the battery charge, possibly by means of a standard density gauge.

TABLE 1 shows, from left to right, the battery charge percentage and corresponding electrolyte density and H2SO4 content in grams and moles per litre.

### TABLE 1

| Charge | Density (Kg/dm3) | H2SO4 content gr/litre | H2SO4 content moles/litre |
|--------|--------|--------|--------|
| 100% | 1.290 | 498 | 5.07 |
| 90% | 1.261 | 443 | 4.52 |
| 80% | 1.235 | 395 | 4.03 |
| 70% | 1.213 | 361 | 3.70 |
| 60% | 1.191 | 317 | 3.23 |
| 50% | 1.165 | 273 | 2.78 |
| 40% | 1.141 | 231 | 2.36 |
| 30% | 1.119 | 194 | 1.98 |
| 20% | 1.100 | 163 | 1.66 |
| 10% | 1.069 | 110 | 1.47 |
| 0% | 1.045 | 73 | 0.74 |

TABLE 2 shows the atomic or molecular weights of the elements and compounds in reaction (1).

## TABLE 2

| Element or compound | Symbol | Atomic or molecular weight (gr/mole) |
|---------------------|--------|--------------------------------------|
| Hydrogen | H | 1 |
| Oxygen | O | 16 |
| Sulphur | S | 32 |
| Lead | Pb | 207 |
| Sulphuric acid | H2SO4 | 98 |
| Lead dioxide | PbO2 | 239 |

When charging the battery, reaction (1) is obviously inverted.

Another known battery charge measuring device, again based on electrolyte density, employs a differential transformer, the core of which is displaced as a function of the pressure (obviously dependent on density) exerted by the electrolyte.

Displacement of the core, which corresponds to a variation in the transformation ratio, modulates an output signal proportional to the battery charge.

Known devices of the aforementioned types are difficult to automate and nevertheless require moving mechanical elements subject to jamming.

The solid state sensor according to the present invention provides for overcoming the above drawbacks.

The sensor according to the present invention features a pair of electrodes (herein referred to as auxiliary electrodes, to distinguish them from those normally immersed in the electrolyte) by which the chemical energy of the electrolyte is converted into electrical energy during discharge, and vice versa when charging the battery.

Said auxiliary electrodes are made of a suitably selected metal and its oxide, and the difference in potential between them, which is proportional to the sulphuric acid concentration in the electrolyte and, therefore, the charge of the battery, acts as a reference parameter for measuring the charge.

The Nernst equation for calculating the emf developed by a battery states:

$$E = EO - (R*T/n*F)*lnQ \qquad (2)$$

where:
E = emf developed by the battery
EO = standard potential depending on the electrolyte and electrode material
R = thermodynamic constant
T = absolute temperature
n = valence of the electrolyte ions
F = Faraday constant

Q = reaction quotient = $(C \wedge t)^*(D \wedge u)/((A \wedge r)^*(B \wedge s))$ for:

$$. \quad r{*}A + s{*}B \quad <---> \quad t{*}C + u{*}D \qquad (3)$$

According to the above equation, the emf developed at the terminals of a pair of electrodes immersed in an electrolyte is proportional to the logarithm of the activity of the acid contained in the electrolyte, which activity is in turn related to the ion density of the electrolyte.

Since said density, as shown above, is proportional to the density of the solution, said emf may be employed, according to the present invention, as a parameter indicating the charge of the battery.

The sensor according to the present invention is composed of said two electrodes and an instrument for determining the difference in potential of the same.

Said two auxiliary electrodes in other words act as a cell, thanks to an electrochemical process involving distinct ion species, one subjected to oxidation and the other to reduction, in mechanically separate but electrically connected spaces.

This enables the formation of different electron concentrations at the auxiliary electrodes and, therefore, a measurable difference in potential. As shown, in fact, in Table 1, between the fully charged and fully discharged condition, the concentration of sulphuric acid in the electrolyte varies by about four moles, thus giving a sufficiently wide emf measuring range for ensuring correct processing.

The device according to the present invention provides for numerous advantages:
- solid state design involving no moving parts;
- troublefree manufacture;
- low cost;
- potential miniaturization;
- working life at least equal to that of the battery;
- reliability: breakage in no way damages the battery;
- shock and vibration resistance;
- resistance to temperatures ranging from 0 to 75° C;
- monotonicity, linearity, repeatability.

The auxiliary electrodes on the device must of course be such as to prevent long-term self-discharging of the battery or poisoning of the electrolyte.

For this reason, the auxiliary electrodes must not contain any of the following substances:
- calcium or magnesium oxide
- iron or ferrous oxide
- copper
- antimony
- chromium
- nickel
- ammonium (NH4)
- nitrites
- nitrates
- organic substances

For this purpose, according to a preferred embodiment of the present invention, the materials selected for the auxiliary electrodes are lead dioxide and lead, i.e. the same materials of which the battery electrodes are composed.

Using the same materials for the battery and auxiliary electrodes prevents the battery from being poisoned, as would be the case with a glass electrode, in the event of malfunctioning of the sensor.

The main characteristics of the present invention are summed up in the claims.

The aims and advantages of the present invention are shown in the following description with reference to the accompanying drawings, in which:

Fig.1 shows a vertical section of a battery featuring six elements, each with a device in accordance with the present invention;

Fig.2 shows a side view of a preferred embodiment of the cartridge supporting the device according to the present invention;

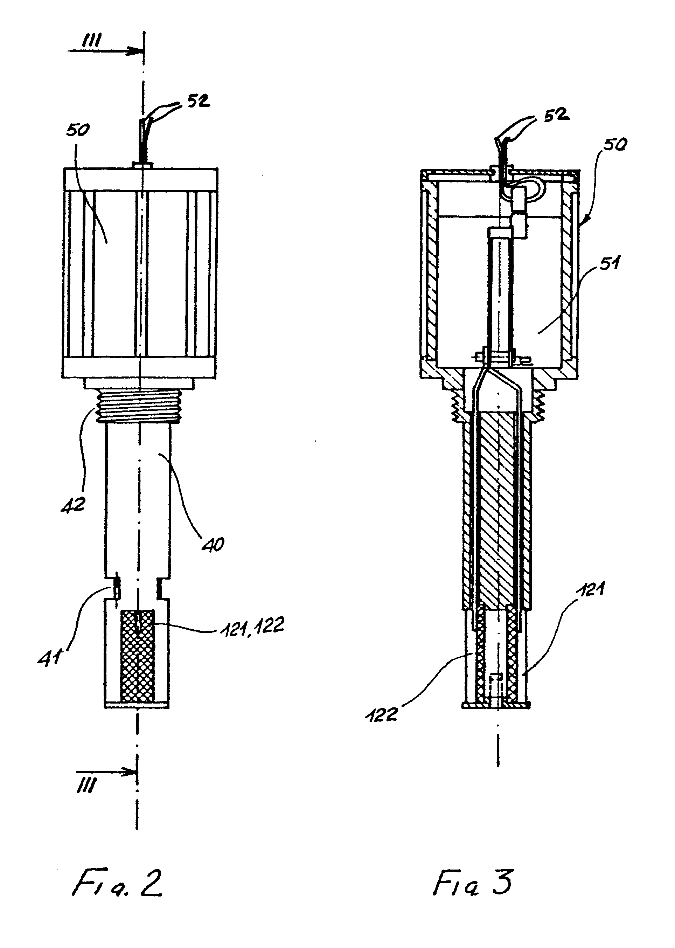

Fig.3 shows a section along line III-III in Fig.2;

Fig.4 shows an axial section of a second embodiment;

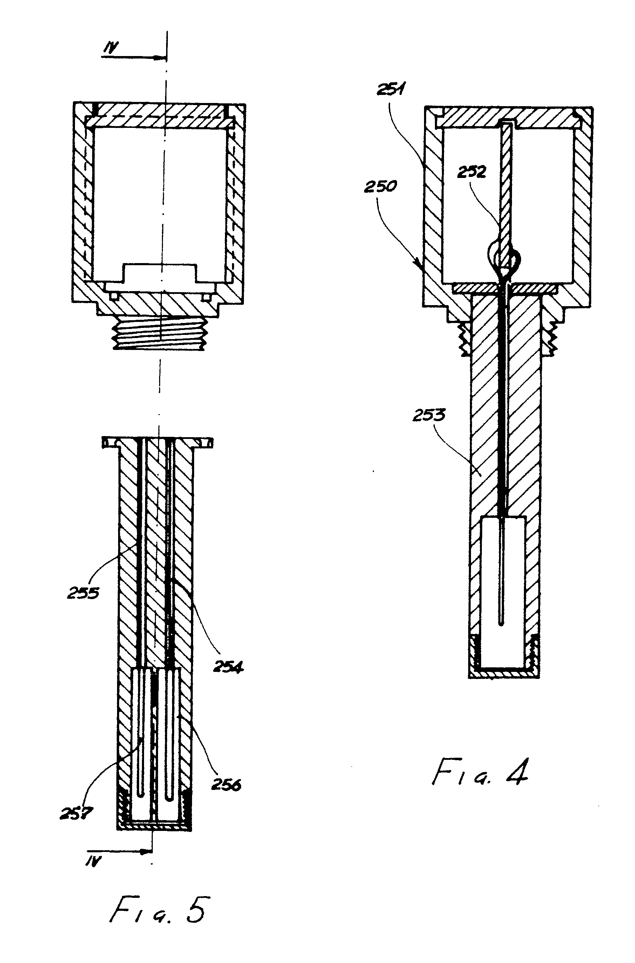

Fig.5 shows an axial section perpendicular to that of Fig.4 and with the various component elements shown separately.

4

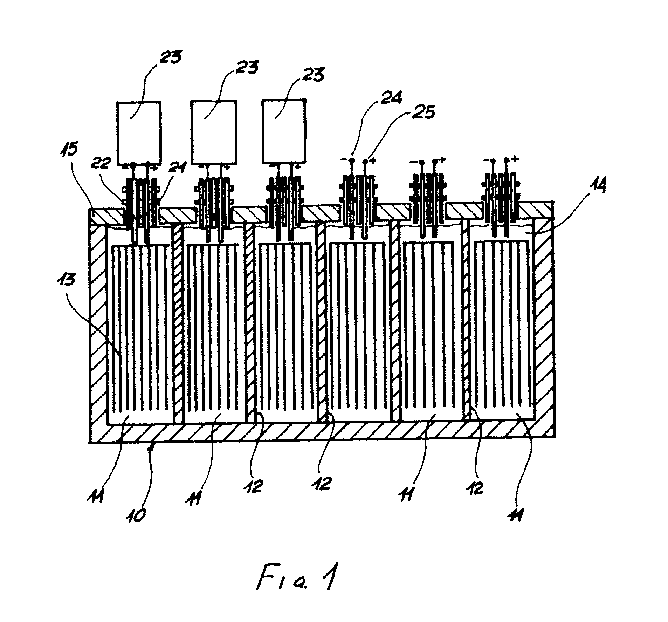

Number 10 in Fig.1 indicates a battery having six elements 11 separated by diaphragms 12.

Inside each element 11, provision is made in known manner for electrodes in the form of vertical parallel plates 13 series connected electrically, and the output connectors of which are not shown.

Electrodes 13 are immersed in an electrolyte 14 the level of which reaches the top of battery 10.

In the example shown, electrolyte 14 consists of a solution of sulphuric acid. The battery electrodes, in this case, consist of alternating plates of lead oxide and lead.

According to the present invention, the top 15 of each battery element 11 is fitted through with a pair of auxiliary electrodes 21 and 22, the bottom ends of which are immersed inside the electrolyte.

For the reasons given previously, auxiliary electrodes 21 and 22 are preferably made of lead and lead dioxide. The two external connectors 24 and 25 of auxiliary electrodes 21 and 22 are connected to an amplifying voltmeter 23 for measuring the difference in potential of auxiliary electrodes 21 and 22 and also housing an electronic device for measuring the temperature and level of the electrolyte.

As stated previously, said difference in potential is related to the concentration of sulphuric acid in the electrolyte and, therefore, to the charge of the battery.

The difference in potential detected at connectors 24 and 25 is thus related to said concentration and, therefore, to the battery charge.

As shown in Fig.s 2 and 3, auxiliary electrodes 21 and 22, in the form of plates 121 and 122, are housed and protected inside the bottom end of a tube 40 having openings 41 through which it is filled with electrolyte.

At the top, tube 40 presents a thread 42 by which it is fitted inside a threaded hole in the cover of each battery element 11.

Over tube 40, a casing 50 is provided for an electronic circuit 51 designed to interpret the difference in potential of electrodes 21 and 22, and convert this into a signal proportional to the battery charge.

Said signal is made available at ends 52 of a pair of output conductors on electronic circuit 51.

In the second embodiment shown in Fig.s 4 and 5, the device according to the present invention is in the form of a cartridge 250 divided into two bodies: a threaded PVC casing 251 housing electronic circuits 252; and a porous plastic tube 253 which fits inside the bottom end of casing 251.

Porous tube 253 presents two through holes 254, 255 terminating at the bottom with two cavities 256, 257. Said through holes and cavities house two pure lead wires acting as conductors.

Cavities 256 and 257 are filled respectively with lead and lead dioxide, both in the form of granules.

By virtue of the porous nature of the material, the electrolyte penetrates inside the cavities, thus giving rise to chemical reactions.

Finally, the lead wires are connected to an amplifying voltmeter for measuring the difference in potential of the electrodes.

To those skilled in the art it will be clear that changes may be made to the device as described and illustrated herein without, however, departing from the scope of the present invention.

## Claims

1. A solid state sensor for measuring the charge of lead acid batteries, characterised by the fact that it features a pair of auxiliary electrodes immersed in the electrolyte of the battery and connected electrically, at the other end, to the terminals of a voltage sensor.

2. A solid state sensor for measuring the charge of lead acid batteries as claimed in Claim 1, characterised by the fact that said auxiliary electrodes consist respectively of a metal and the corresponding metal oxide.

3. A solid state sensor for measuring the charge of lead acid batteries as claimed in the foregoing Claims, characterised by the fact that said auxiliary electrodes are made respectively of lead and lead oxide.

4. A solid state sensor for measuring the charge of lead acid batteries as claimed in the foregoing Claims, characterised by the fact that said auxiliary electrodes are housed in the bottom end of a protective tube immersed in the electrolyte of the battery and having openings through which it is filled with said electrolyte; and by the fact that said protective tube presents a thread at the top by which it is fitted inside a threaded hole on the battery cover.

5. A solid state sensor for measuring the charge of lead acid batteries as claimed in the foregoing Claims, characterised by the fact that, over said protective tube, there is provided a casing housing an electronic circuit for processing the signal from said auxiliary electrodes.

6. A solid state sensor for measuring the charge of lead acid batteries as claimed in the foregoing Claims, characterised by the fact that, according to a further embodiment, it features two superimposed coaxial tubes, the top one housing electronic circuits, and the bottom one presenting two ducts terminating with two cavities respectively containing lead oxide and lead; and by the fact that passages are formed in said bottom tube for connecting said cavities to the surrounding electrolyte.

7. A solid state sensor for measuring the charge of lead acid batteries as claimed in the foregoing Claims, characterised by the fact that said bottom tube consists of a porous tube enabling passage of the electrolyte into said cavities.

Fig. 1

Fig. 2

Fig. 3

Fig. 5

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | DE-C-3 220 147   (DETA-AKKUMULATORENWERK GMBH) <br> * the whole document * <br> — — — | 1-3,4-7 | H 01 M <br> 10/48 |
| Y | US-A-4 247 811   (EUGENE FINDL) <br> * abstract * * column 2, lines 48 - 62 * * column 3, lines 14 - 35 * * figure 1 * <br> — — — | 4-7 | |
| X | PATENT ABSTRACTS OF JAPAN vol. 9, no. 266 (E-352)(1989) 23 October 1985, <br> & JP-A-60 112265 (NIHON DENCHI K.K.) 18 June 1985, <br> * the whole document * <br> — — — | 1-3 | |
| X | PATENT ABSTRACTS OF JAPAN vol. 11, no. 161 (E-509)(2608) 23 May 1987, <br> & JP-A-61 294770 (JAPAN STORAGE BATTERY CO. LTD.) 25 December 1986, <br> * the whole document * <br> — — — | 1-3,7 | |
| X,A | DE-A-3 737 545   (LUDWICZAK V.) <br> * the whole document * <br> — — — | 1,4-6 | |
| A | US-A-4 329 406   (ERNEST A. DAHL ET AL.) <br> * abstract * * column 2, line 35 - column 3, line 63; figures 1-4 * <br> — — — | 4-6 | **TECHNICAL FIELDS SEARCHED (Int. Cl.5)** <br><br> H 01 M |
| A | PATENT ABSTRACTS OF JAPAN vol. 6, no. 32 (E-96)(910) 26 February 1982, <br> & JP-A-56 152173 (NIPPON DENCHI K.K.) 25 November 1981, <br> * the whole document * <br> — — — — — | 1,4,6 | |

The present search report has been drawn up for all claims

| Place of search | Date of completion of search | Examiner |
|---|---|---|
| Berlin | 13 March 91 | MOUTARD P.J. |